# DEMANDE DE BREVET EUROPEEN

(11) **EP 1 394 512 A1**
(43) Date de publication de la demande: **03.03.2004**
(21) Numéro de dépôt: 02019337.1
(22) Date de dépôt: 29.08.2002
(51) Int. Cl.: G01F 1/32, G01F 15/12, G01N 27/07

(54) **Capteur de variation d'impédance et application à un débitmètre à oscillation fluidique**

(71) Demandeur: Sontex S.A. (Sontex AG) (Sontex LTD), 2605 Sonceboz (CH)
(72) Inventeur: Challandes, Claude, 2605 Sonceboz (CH); Von Allmen, Frédéric, 2300 La Chaux-de-Fonds (CH); Hugunenin, Gérald, 2613 Villeret (CH)
(74) Mandataire: Gresset, Jean

(57) **Abrégé**

L'invention concerne un capteur de variation d'impédance pour la caractérisation d'un fluide comportant un support isolant (22), deux électrodes (10) portées par le support (22), munies chacune d'une surface destinée à être en contact avec le fluide et un circuit électronique de détection de variation d'impédance relié aux électrodes (10), ladite surface étant formée par une couche (18) en diamant.

L'invention concerne également un débitmètre à oscillation fluidique comportant:
- une pièce oscillatrice (44) intégrée dans un circuit de fluide, dotée de parois (46) formant deux canaux (48), l'oscillation du fluide étant obtenue par le passage successif du fluide dans chacun des canaux (48), et
- des moyens de détermination de la fréquence d'oscillation qui comprennent un capteur de variation d'impédance tel que définit ci-dessus et un dispositif de comptage et d'affichage (72) pour définir un débit en fonction de la fréquence d'oscillation.

## Description

La présente invention concerne les capteurs de variation d'impédance destinés à caractériser un fluide, spécialement à en mesurer le débit. De tels capteurs permettent, par exemple, de mesurer la variation de la résistance électrique d'un fluide avec lequel il est en contact, laquelle est fonction de l'épaisseur de la couche de fluide, de sa vitesse d'écoulement, mais aussi de sa composition.

Un capteur de ce type comporte, généralement, un support isolant, deux électrodes portées par le support, munies chacune d'une surface destinée à être en contact avec le fluide et un circuit électronique de détection relié aux électrodes. Une mesure de variation d'impédance permet de déterminer l'une ou l'autre des caractéristiques mentionnées ci-dessus. Cette mesure peut, toutefois, être affectée par l'état de surface des électrodes. Il apparaît, en effet, qu'un dépôt s'y forme parfois, par réaction électrochimique et modifie les paramètres mesurés. Ce dépôt ne peut être que partiellement et lentement éliminé par l'inversion de la polarité aux bornes des électrodes. De plus, la couche formant l'électrode s'altère.

Pour pallier cet inconvénient, le capteur selon l'invention comporte des électrodes dont la surface en contact avec le fluide est formée par une couche en diamant, et plus spécialement en diamant dopé. Ce type d'électrodes permet non seulement de ralentir la formation d'un éventuel dépôt, mais surtout de dissoudre facilement et totalement ce dépôt, par le passage d'un courant contraire. Il a, en effet, été constaté que, si le diamant peut être contaminé, il ne s'altère pas pour autant.

De manière avantageuse, les deux électrodes et le circuit électronique de détection sont agencés pour mesurer la vitesse d'écoulement d'un fluide.

Les électrodes peuvent être formées sur un substrat en matériau semi-conducteur dopé, portant la couche de diamant. De manière avantageuse, ce substrat peut, en outre, porter un senseur destiné à mesurer un paramètre de type physique, chimique ou électrochimique du fluide.

Le circuit électronique de détection est agencé pour appliquer auxdites électrodes soit un signal en courant continu, dont la polarité peut être inversée périodiquement, soit un signal en courant alternatif. Il comporte des moyens pour mesurer une variation de la résistance ou de la capacité électrique.

De préférence, le capteur selon l'invention comporte deux paires d'électrodes et le circuit électronique de détection est agencé de manière à ce que les signaux appliqués aux paires d'électrodes soient déphasés l'un par rapport à l'autre, et que la mesure soit effectuée en prenant en compte les informations issues de la paire d'électrodes aux bornes de laquelle la polarité a été inversée en dernier lieu, au moins durant un temps suffisant pour permettre l'élimination d'une éventuelle couche de contamination.

De tels capteurs trouvent une application particulièrement intéressante dans certains débitmètres. Notamment, on utilise leur aptitude à mesurer des variations de résistance dans le cas de débitmètres conductimétriques déjà décrits.

Par exemple, dans le brevet BE 890.523, le débit est déterminé en établissant une relation entre le signal fourni par des électrodes sensibles à la vitesse de rotation d'un rotor entraîné par un flux de fluide et le débit du flux. Cette solution est intéressante, mais difficilement précise à long terme, car la plage de mesure se modifie à cause de la contamination des électrodes.

Un débitmètre dit "à oscillation fluidique" propose une solution alternative pour accéder au débit d'un fluide. L'un d'entre eux est décrit dans le document EP 0391954. Il comprend :
- un boîtier muni d'une entrée et d'une sortie reliées à un réseau de distribution de fluide,
- une pièce oscillatrice, disposée dans le boîtier et dotée de parois formant deux canaux de commande et agencées de manière à ce qu'une partie du fluide soit déviée alternativement dans l'un puis dans l'autre des canaux, pour former ainsi un système oscillant, et
- des moyens de détermination de la fréquence d'oscillation.

La fréquence de l'oscillation est mesurée, par exemple, par un capteur différentiel de pression piézo-électrique judicieusement placé dans la pièce oscillatrice. Une telle solution permet la réalisation d'un débitmètre fiable et précis.

Dans ce débitmètre, l'amplitude du signal fourni par le capteur différentiel est proportionnel au carré du débit. Vu la plage de débit devant être couverte par le débitmètre, cette amplitude est donc très étendue, ce qui augmente les contraintes sur le capteur.

La présente invention a donc pour but de fournir un débitmètre dont le signal de réponse est proportionnel au débit. De plus, il est pratiquement insensible aux variations de température ou de composition chimique du fluide, peu cher et fiable à long terme.

A cet effet, le débitmètre défini ci-dessus comporte des moyens de détermination de la fréquence d'oscillation comprenant :
- un capteur de variation d'impédance selon l'invention, dont les électrodes sont disposées dans l'un au moins desdits canaux, et
- un dispositif de comptage et d'affichage relié au circuit électronique de détection pour déterminer un débit en fonction de la fréquence d'oscillation, définie par la mesure de la variation de l'impédance aux bornes desdites électrodes.

Avantageusement, les électrodes du capteur sont placées par paires, une paire dans chacun des canaux de la pièce oscillatrice. Elles sont placées de manière à ce qu'une de leurs faces soit dans le prolongement des parois formant les canaux. De plus, les moyens de détermination de la fréquence peuvent être agencés de manière à déterminer la fréquence par mesure différentielle à partir des signaux détectés aux bornes des électrodes de chaque paire. De la sorte, il est possible d'éliminer une part importante du bruit de fond qui se superpose au signal de la mesure.

L'invention sera mieux comprise à la lecture de la description qui suit, faite en regard du dessin annexé, sur lequel :
- la figure 1 représente une électrode du type de celle utilisée dans le capteur selon l'invention, en vue éclatée en a, et sur un support en b et en c, respectivement en perspective et en coupe;
- la figure 2 représente une pièce oscillatrice, en a, insérée dans un boîtier équipant un débitmètre selon l'invention, et en b, avec les électrodes montrées en vue éclatée et connectées à une électronique de mesure;
- la figure 3 représente en vue éclatée les différents éléments constituant ce débitmètre;
- la figure 4 représente les variations de tension et de résistance mesurées aux bornes de chacune des paires d'électrodes; et
- la figure 5 représente un mode de réalisation particulier de l'invention.

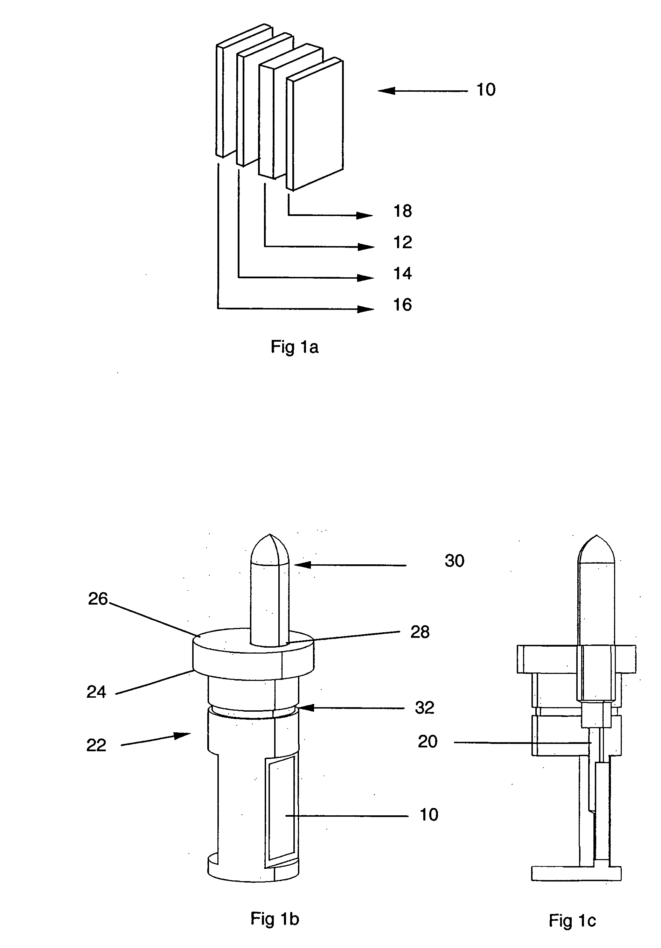

Sur la figure 1a, on a représenté une électrode 10 en forme de plaquette, qui présente deux faces et comporte :
- un substrat en matériau semi-conducteur dopé 12, du silicium par exemple, dont l'épaisseur est typiquement de 1 mm,
- une couche de titane 14 déposée sur une des faces du substrat 12, dont l'épaisseur est comprise entre 50 et 100 Å,
- une couche d'or 16 déposée sur la couche de titane 14, dont l'épaisseur est comprise entre 0,5 et 2 µm,
- une couche de diamant 18 déposée sur l'autre face du substrat 12, par exemple selon le procédé décrit dans le document FR 99.02543, et dont l'épaisseur est comprise entre 0,1 et 1 µm.

Les couches d'or 16 et de titane 14 se prêtent particulièrement bien à la soudure et c'est sur elles que sont fixés des fils conducteurs 20, visibles sur la figure 1c, nécessaires à l'application d'un signal électrique, comme cela sera expliqué plus loin. Le silicium est un substrat sur lequel une couche de diamant synthétique, déposée selon le procédé décrit dans le brevet mentionné ci-dessus, adhère particulièrement bien. Le silicium et le diamant sont rendus conducteurs par dopage, par exemple au bore, au phosphore ou à l'antimoine pour la couche de silicium, au bore ou au bore et à l'azote pour la couche de diamant. Malgré l'usage de matériaux tels que le diamant et l'or, il apparaît que le prix de revient de telles électrodes est sensiblement plus faible que celui d'un capteur piézo-électrique.

Comme le montrent les figures 1b et 1c, l'électrode 10 est partiellement noyée dans un support 22 de forme globale cylindrique et en matière isolante. L'une des deux faces de l'électrode 10, couverte des couches de titane 14 et d'or 16, est accolée au support 22, l'autre, portant la couche de diamant 18, est destinée à être en contact avec le fluide dont on cherche à mesurer le débit. L'électrode 10 forme ainsi un méplat sur le support 22.

Une des extrémités du support 22, utilisée pour connecter l'électrode 10, se termine par un épaulement 24, formé par un disque 26 de diamètre supérieur à celui du support 22. Le disque 26 est doté d'un trou cylindrique 28, d'axe parallèle à celui du support 22, ajusté pour permettre le passage et le maintien d'une fiche de contact mâle 30, connectée à la couche d'or 16 de l'électrode 10 par l'intermédiaire du fil conducteur 20.

Le support présente encore sur son contour une gorge 32, destinée à recevoir un joint annulaire non représenté, dont la fonction sera précisée plus loin.

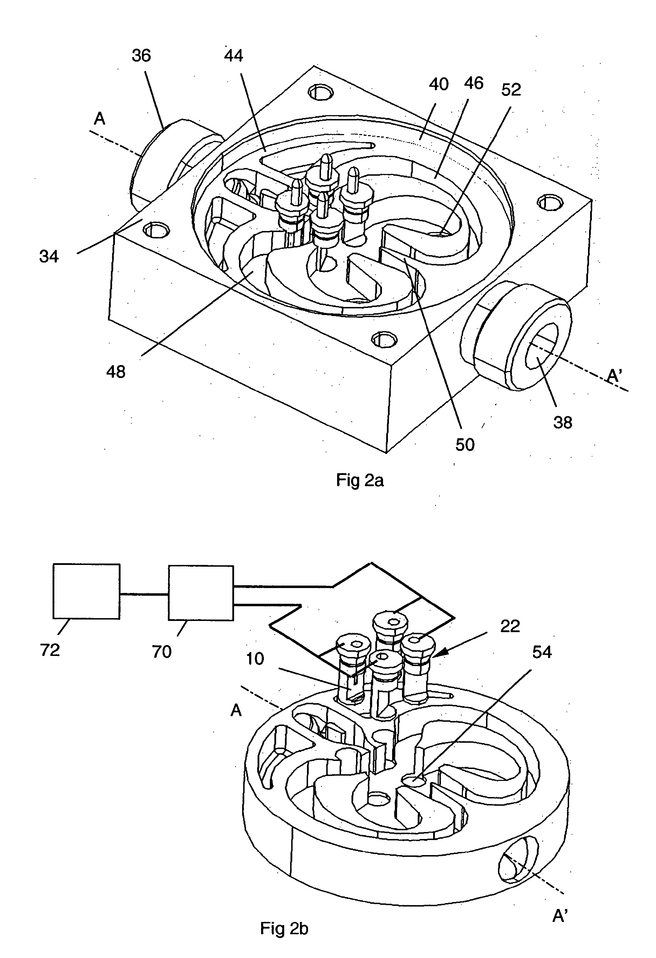

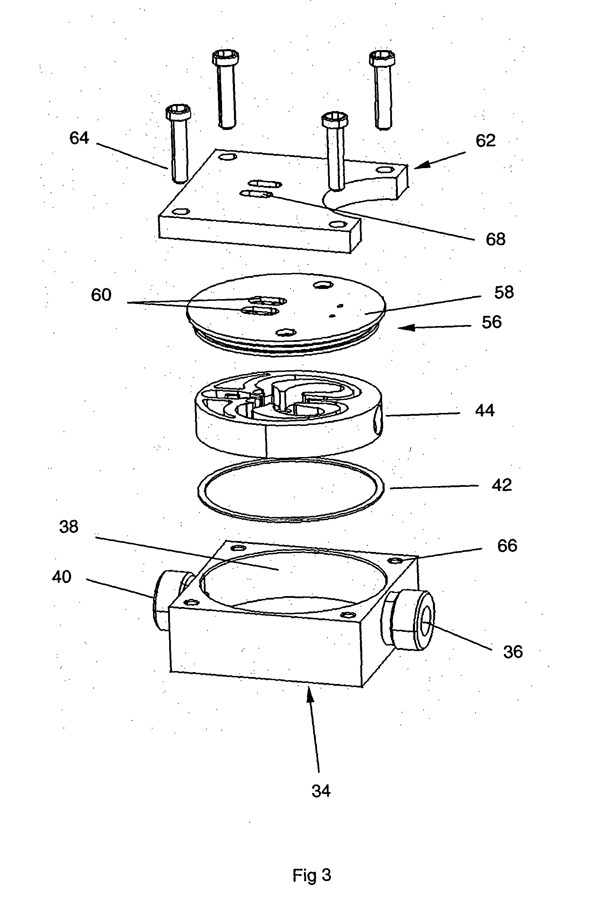

La figure 2a montre un boîtier 34 doté d'une entrée 36 et d'une sortie 38 connectées par tout moyen connu au réseau du fluide dont on veut mesurer le débit. Dans le boîtier est définie une chambre cylindrique 40 à l'intérieur de laquelle prend place un joint de compression 42 visible sur la figure 3, puis, une pièce oscillatrice 44 munie de parois 46 formant des canaux de commande 48 et un organe déflecteur 50. Les canaux 48 sont de section droite et constante. Ils sont symétriques l'un de l'autre par rapport à un axe AA' qui passe par l'entrée 36 et la sortie 38 du fluide. Ils débouchent en regard l'un de l'autre au niveau de l'entrée 36 du fluide, perpendiculairement à AA', après avoir décrit une courbe globalement circulaire. La chambre est en outre percée de deux orifices 52, pratiqués dans son fond et reliés à la sortie 38.

Ainsi, lorsque le fluide pénètre dans la chambre 40 par l'entrée 36, une partie s'écoule directement vers la sortie au travers des orifices 52. L'autre partie est projetée sous la forme d'un jet contre l'organe déflecteur 50. Grâce à l'asymétrie intrinsèque de l'écoulement fluidique, le jet pénètre préférentiellement dans l'un des canaux 48, par exemple le droit. Il s'écoule ensuite dans le canal, qui joue le rôle d'une boucle de retour et débouche perpendiculairement sur la droite de la base du jet entrant. Sous l'effet de la pression qu'il subit alors, celui-ci est dévié sur sa gauche, tandis que la vitesse du fluide présent dans le canal droit chute. Le fluide pénètre dans le canal gauche, qui joue le rôle d'une boucle de retour gauche, débouchant perpendiculairement sur la gauche de la base du jet entrant, le déviant, sous l'effet de la pression, en direction du canal droit. C'est alors dans le canal gauche que la vitesse du fluide présent chute, tandis qu'elle augmente dans le canal droit. Le fluide rejoint la sortie 38 par les orifices 52.

Une oscillation du jet entrant peut ainsi se créer et s'entretenir, sa fréquence étant proportionnelle à la vitesse du fluide dans les canaux 48 et donc au débit du fluide.

Particulièrement à l'invention, quatre électrodes identiques à celle qui a été décrite ci-dessus sont installées dans les parois 46 de la pièce oscillatrice 44, au niveau de la sortie de chacun des canaux 48 et de part et d'autre de ceux-ci. Les électrodes s'insèrent dans quatre orifices cylindriques borgnes 54, dont le diamètre est légèrement supérieur à celui des supports 22 des électrodes 10. Les joints annulaires insérés dans les gorges 32 assurent à la fois l'étanchéité de la chambre 40 et le maintien des supports 22 dans les orifices 54. Ces supports 22 sont disposés de manière à ce que la surface des électrodes 10 soit tangente aux canaux 48, de sorte qu'elles s'inscrivent dans la continuité de la paroi 46. Ils sont placés deux à deux en regard l'un de l'autre, du côté de la sortie des canaux 48, symétriquement par rapport à l'axe AA'.

Le principe des pièces oscillatrices est connu de l'homme de métier et une description plus détaillée se trouve notamment dans le document EP 0391954 de la firme Sontex. Cependant, il est important de noter que, contrairement à ce qu'il est nécessaire de faire avec le capteur piézo-électrique, l'utilisation du capteur de variation d'impédance n'impose pas de dévier le fluide perpendiculairement à sa trajectoire d'entrée-sortie, ce qui permet de limiter l'épaisseur de la pièce 44. L'espace ainsi libéré peut éventuellement être mis à profit pour constituer un by-pass, permettant de modifier la plage de mesures, pour une même pièce oscillatrice.

On se référera maintenant à la figure 3, qui montre, en éclaté, un disque de même diamètre que la pièce 44, destiné à former un couvercle 56 au-dessus d'elle. Il présente sur sa face supérieure, c'est à dire celle qui n'est pas orientée vers la pièce 44, un petit rebord 58 sur toute sa circonférence, formé par un anneau de diamètre légèrement supérieur au diamètre du couvercle 56. Ce dernier est également traversé par quatre trous circulaires 60, placés exactement en regard des orifices 54 ménagés dans la pièce 44. Du côté de la face supérieure du couvercle 56, les trous 60 se terminent par une ouverture plus large, épousant la forme des épaulements 24 des supports 22 des électrodes 10.

Ainsi, lorsque le couvercle 56 est placé au-dessus de la pièce 44, de sorte que les trous 60 du couvercle soient superposés aux orifices 54 de la pièce 44, les électrodes 10, fixées sur leur support 22, peuvent être glissées à travers les différents perçages alignés.

Pour assurer la mise en place de la pièce 44 et du couvercle 56 dans le boîtier 34, une plaque de maintien 62 se superpose au couvercle. Quatre vis 64 traversent la plaque et coopèrent avec quatre taraudages 66 ménagés aux quatre coins de la face supérieure du boîtier 34.

La plaque 62 présente, en outre, des ouvertures 68 laissant apparaître complètement les trous 60 ménagés dans le couvercle 56. Quand les électrodes 10 sont en place, la connectique peut donc se faire facilement par ces trous.

L'assemblage des différents constituants du débitmètre se fait par la mise en place dans le boîtier 34 : du joint de compression 42, de la pièce oscillatrice 44, du couvercle 56, des électrodes 10 fixées à leur support 22 et de la plaque de maintien 62. La structure comporte des moyens de positionnement non représentés et agencés de manière à ce que les orifices 54 de la pièce 44, 60 du couvercle 56 et 68 de la plaque de maintien 62, destinés à permettre le passage des électrodes 10 et de leur support 22, soient alignés. Enfin, il est primordial que le méplat formé par chaque électrode 10 sur son support 22 soit placé dans le prolongement des parois 46 formant les canaux 48, de manière à ce que la face des électrodes 10 qui n'est pas accolée au support 22 soit entièrement en contact avec le fluide circulant dans les canaux 48 et qu'elle soit parallèle à la face de l'électrode placée en regard d'elle.

Ainsi, quand un fluide circule dans le débitmètre et que les quatre électrodes sont en place et branchées à un circuit électronique de détection 70, schématiquement représenté sur la figure 2b, on mesure la conductivité du milieu compris entre chaque paire d'électrodes. On comprend que, selon que le fluide circule ou est quasi-statique entre deux électrodes d'une paire, au gré de ses oscillations, l'impédance variera et oscillera à la même fréquence que le fluide, proportionnellement au débit.

Le système étant étalonné, un dispositif de comptage et d'affichage 72, relié au circuit électronique de détection 70, convertit les signaux fournis par les électrodes en données significatives pour un utilisateur. Cette conversion peut se faire soit par une analyse directe du signal indicatif de la variation de la résistance aux bornes de l'une ou l'autre des paires d'électrodes, soit par comparaison de ces mêmes signaux.

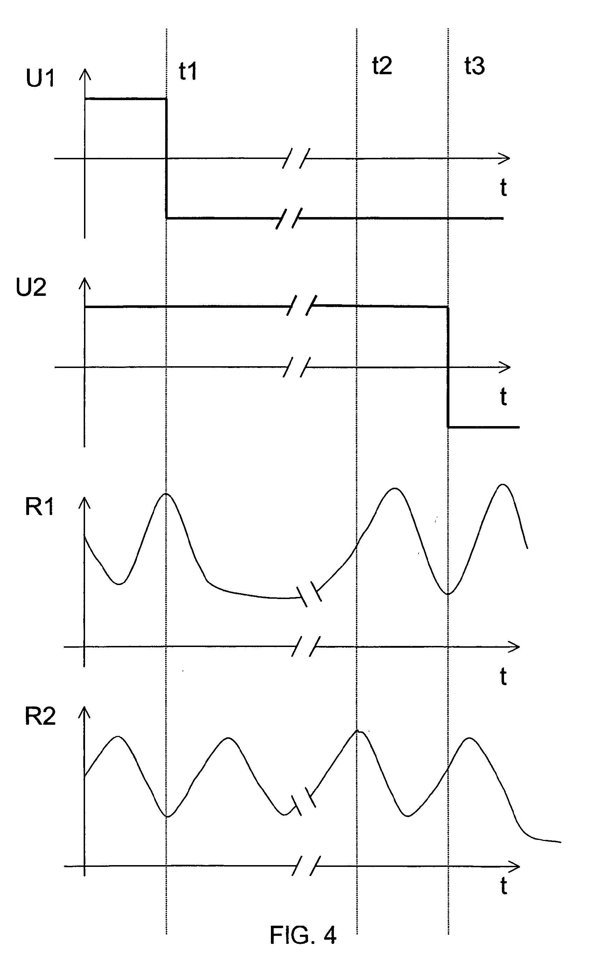

On notera que, si l'on adapte le traitement électronique, le débitmètre fonctionne aussi bien en courant alternatif qu'en courant continu. Cependant, dans ce dernier mode, il est avantageux d'inverser périodiquement les polarités des électrodes, toutes les quinze minutes par exemple, afin d'éviter toute contamination de la cathode. De façon particulièrement avantageuse et comme illustré sur la figure 4, les inversions de polarité de chacune des paires d'électrodes peuvent être déphasées pour éviter tout risque de manquer une oscillation du fluide. En effet, au cours de la décontamination qui suit immédiatement l'inversion, la paire d'électrodes ne fournit pas d'informations valables.

Comme le montre la figure 4, lorsqu'au temps t1 la polarité de la première paire d'électrodes est inversée, la résistance mesurée R1 tend vers 0. Le dispositif de comptage et d'affichage ne calcule alors le débit que d'après la fréquence d'oscillation de la résistance R2 mesurée aux bornes de la deuxième paire d'électrodes. Après quelques instants, à t2, la décontamination étant terminée, la première paire d'électrodes peut reprendre une mesure correcte et le signal fourni pour R1 oscille à nouveau. Il est alors possible, à t3, d'inverser la polarité de la deuxième paire d'électrodes pour procéder à sa décontamination.

Des essais pratiques ont montré que des mesures pouvaient être faites avec précision pour des débits allant de quelques litres à plusieurs milliers de litres par heure, les fréquences d'oscillation variant dans une plage de 1 à 500, qui est encore sensiblement plus large que celle des appareils à oscillation fluidique existants. Quant à la fréquence d'oscillation du fluide dans la pièce oscillatrice, elle est typiquement comprise entre 0,1 et 500 Hz.

La présente invention propose donc un débitmètre conductimétrique à oscillation fluidique, dont la qualité du signal est très stable, indépendamment des débits mesurés. De plus, ni la température, ni la dureté de l'eau n'influent sur les résultats et il n'est pas sensible à la contamination des électrodes, ce qui lui confère une excellente fiabilité à long terme. Le signal fourni est proportionnel au débit, ce qui simplifie le traitement électronique et évite au capteur de subir des contraintes trop grandes.

L'exemple décrit n'est pas limitatif et un oscillateur fluidique peut être équipé d'une pluralité d'électrodes. Chacune d'elle peut être placée en n'importe quel endroit d'un des canaux. Il suffit que deux soit au voisinage l'une de l'autre. Il est également possible d'adapter la forme de la pièce en fonction de l'application à laquelle elle est destinée, sa réalisation peut être simplifiée, par exemple en la fabricant d'une pièce, par surmoulage, autour des électrodes. De plus, le circuit électronique de détection 70 et le dispositif de comptage et d'affichage 72 peuvent être réunis dans un même boîtier.

Par ailleurs, l'utilisation du capteur de variation d'impédance peut être étendue, non seulement à tout autre oscillateur fluidique, y compris ceux pour lesquels les canaux sont virtuels et où le jet n'oscille que sous l'effet des courants créés, mais encore à d'autres types de débitmètres, comme par exemple, les débitmètres à vortex ou mécaniques de tout genre.

Un mode de réalisation particulier de l'invention consiste à utiliser des électrodes miniaturisées, dites interdigitées, telles que décrites dans un article publié dans la revue Electrochemical Society Proceedings, Volume 97-32, p 275-283. Les deux électrodes ont la forme de peignes disposés en quinconce et imbriqués l'un dans l'autre sur un même support. L'ensemble ainsi formé par les électrodes, le support et des moyens de connectique est de taille très réduite et peut être facilement surmoulé dans la pièce oscillatrice, de manière à ce que les électrodes soient en contact avec le fluide.

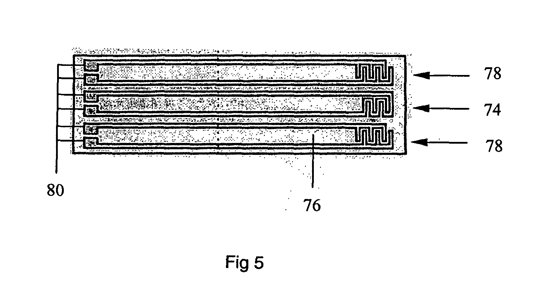

En outre, un senseur complémentaire capable de mesurer un autre paramètre physique, chimique ou électrochimique peut être disposé sur le même support et le signal qu'il fournit peut être traité par le dispositif de comptage et d'affichage 72 adapté en conséquence. Il peut s'agir, selon l'exemple présenté sur la figure 5, d'une résistance en diamant dopé 74, disposée sur un substrat en silicium 76, combinée à deux paires d'électrodes interdigitées 78 selon l'invention, agencées pour mesurer alternativement le débit du fluide. Elles sont reliées au circuit électronique 72 par des connecteurs 80, avantageusement disposés du côté du substrat portant les électrodes 78 et la résistance 74. Le diamant constituant la résistance est dopé de manière à ce qu'il présente une courbe caractéristique de type NTC, lui permettant de jouer le rôle de sonde de température.

## Revendications

1. Capteur de mesure de variation d'impédance pour la caractérisation d'un fluide comportant un support isolant (22), deux électrodes (10) portées par le support (22), munies chacune d'une surface destinée à être en contact avec le fluide et un circuit électronique de détection (70) relié aux électrodes (10), **caractérisé en ce que** la surface en contact avec le fluide est formée par une couche en diamant (18).

2. Capteur selon la revendication 1, **caractérisé en ce que** les deux électrodes (10) et le circuit électronique de détection sont agencés pour mesurer la vitesse d'écoulement d'un fluide.

3. Capteur selon la revendication 1, **caractérisé en ce que** la couche en diamant (18) est dopée.

4. Capteur selon l'une des revendications 1 et 3, **caractérisé en ce que** les électrodes comprennent un substrat en matériau semi-conducteur dopé (12) portant ladite couche en diamant (18) et des moyens de connexion pour assurer sa liaison avec ledit circuit (70).

5. Capteur selon la revendication 4, **caractérisé en ce que** ledit substrat porte, en outre, un senseur destiné à effectuer une mesure d'un paramètre de type physique, chimique ou électro-chimique dudit fluide.

6. Capteur selon l'une des revendications 1 à 5, **caractérisé en ce que** le circuit électronique de détection (70) est agencé pour appliquer auxdites électrodes (10) un signal en courant continu.

7. Capteur selon la revendication 6, **caractérisé en ce que** ledit circuit (70) est agencé pour inverser périodiquement la polarité du signal appliqué aux électrodes.

8. Capteur selon l'une des revendications 1 à 5, **caractérisé en ce que** ledit circuit (70) est agencé pour appliquer auxdites électrodes (10) un signal en courant alternatif.

9. Capteur selon l'une des revendications 1 à 8, **caractérisé en ce que** ledit circuit (70) est agencé pour mesurer une variation de la résistance électrique du fluide.

10. Capteur selon la revendication 8, **caractérisé en ce que** ledit circuit (70) est agencé pour mesurer une variation de la capacité électrique du fluide.

11. Capteur selon l'une des revendications 7 à 10, **caractérisé en ce qu'**il comporte deux paires d'électrodes (10), et **en ce que** le circuit électronique de détection (70) est agencé pour que les signaux appliqués aux paires d'électrodes soient déphasés l'un par rapport à l'autre.

12. Capteur selon la revendication 11, **caractérisé en ce que** ledit dispositif (70) est agencé de manière à ne pas prendre en compte les informations issues de la paire d'électrodes aux bornes de laquelle la polarité a été inversée en dernier lieu, au moins durant un temps suffisant pour permettre l'élimination par électrolyse d'une éventuelle couche de contamination.

13. Débitmètre à oscillation fluidique comportant :
- un boîtier (34) muni d'une entrée (36) et d'une sortie (38) reliées à un réseau de distribution de fluide,
- une pièce oscillatrice (44) disposée dans ledit boîtier (34) et dotée de parois (46) formant deux canaux (48), et agencée de manière à ce qu'une partie du fluide soit déviée alternativement dans l'un puis dans l'autre des canaux (48), pour former ainsi un système oscillant, et
- des moyens de détermination de la fréquence d'oscillation,
**caractérisé en ce que** lesdits moyens comprennent un capteur selon l'une des revendications 1 à 12, dont les électrodes sont disposées dans l'un au moins desdits canaux (48) et un dispositif de comptage et d'affichage (72) relié au circuit électronique de détection (70) pour déterminer un débit en fonction de la fréquence d'oscillation définie par mesure de la variation de l'impédance aux bornes desdites électrodes (10).

14. Débitmètre selon la revendication 13, **caractérisé en ce que** les électrodes (10) du capteur sont placées par paires, une paire dans chacun des canaux (48) de la pièce oscillatrice (44).

15. Débitmètre selon la revendication 14, **caractérisé en ce que** les électrodes (10) sont placées de manière à ce qu'une de leurs faces soit dans le prolongement des parois (46) formant les canaux (48).

16. Débitmètre selon l'une des revendications 14 et 15, **caractérisé en ce que** le circuit électronique (70) de détection est agencé de manière à déterminer la fréquence par mesure différentielle à partir des signaux détectés aux bornes des électrodes de chaque paire.
